Europäisches Patentamt

(19) European Patent Office

Office européen des brevets

(11) Publication number: **0 249 495**
A2

## (12) EUROPEAN PATENT APPLICATION

(21) Application number: 87305232.8

(22) Date of filing: 12.06.87

(51) Int. Cl.⁴: **G 06 F 15/20**

(30) Priority: 13.06.86 US 873760

(43) Date of publication of application:
16.12.87 Bulletin 87/51

(84) Designated Contracting States:
BE CH DE ES FR GB IT LI NL SE

(71) Applicant: International Business Machines Corporation
Old Orchard Road
Armonk, N.Y. 10504 (US)

(72) Inventor: Heath, Allen Webster
3409 Shenandoah Drive
Cedar Park Texas 78613 (US)

Levine, Frank Eliot
9406 Chapel Drive Street
Austin Texas 78729 (US)

Pravitz, Wayne Leith
8809 Scotsman
Austin Texas 78750 (US)

(74) Representative: Atchley, Martin John Waldegrave
IBM United Kingdom Limited Intellectual Property
Department Hursley Park
Winchester Hampshire SO21 2JN (GB)

(54) Multi-page document printing system with selectable page ordering and orientation.

(57) The present invention relates to multi-page document printing system of the type which comprises means (51) for storing representations of each page of the document, a plurality of output printers (54, 55) each of which supplies printed pages with a different orientation, and a control system (51) for controlling the supply of the representations of the pages to the output printers so that the document can be printed.

According to the invention the printing system is characterised in that it comprises mode selection means (56) for controlling the operation of the control system so that the control system supplies the representations of the pages to a selected one of the output printers in a selected order so that the pages of the document printed have a predetermined orientation.

FIG. 4

**Description**

MULTI-PAGE DOCUMENT PRINTING SYSTEM WITH SELECTABLE PAGE ORDERING AND ORIENTATION

The present invention relates to a printing system for printing out a multi-page document, such as is produced from a text processing system, for example, so that the pages of the document are printed in a predetermined order with predetermined orientation of the printed side of each page.

A text processing system for purposes of this application can be considered to be made up of a memory for storing a document, a processor or other logic for processing information, software including an operating system and an application program, an input device such as a keyboard for entering commands and information, and a printer. Typically, a text processing system will be an application driven keyboard/display computer system which is either standalone or host connected.

A stored document for purposes of this application can be considered to be made up of an equivalent to a plurality of printed pages of information or portions thereof. A printed document can be made up of a portion of the stored document, and may include a plurality of pages or portions thereof. Making up each of the pages will be lines of text which will be alternatively referred to as records. Each line or record may be numbered on a document basis from the beginning to the end of the document. In addition to being a single line, a record can alternatively be a group of lines.

By "paginating" is meant the dividing of a document, which is stored or being stored, into pages for printing. Paginating can be under either system control or operator control. When under operator control, the operator will key page end codes at desired locations in the document. When under system control, the system will divide the document into pages for printing.

By "collating" is meant the ordering of pages of a document during printing. Collating can be either forward collating or reverse collating. When forward collated, a document can be oriented either first page, print side up or first page, print side down. When reverse collated, the document can be oriented either last page, print side up or last page, print side down. When printing a document from the beginning to the end, and using a printer which ejects printed pages print side up, the printed document will be reverse collated. Upon completion of printing, the last page of the document will be the last page printed, and, if the pages are stacked, the last page will be on top of the stack of pages making up the printed document. Using the same type of printer and printing the document from the end to the beginning, in terms of pages, upon completion of printing, the first page of the document will be the last page printed, and, if the pages are stacked, the first page will be on top of the stack, print side up. As such, the document will be forward collated. It is to be emphasised that collating, for purposes of this application, is related to the ordering of printed pages and not to the physical arrangement or rearrangement of the pages as stored in memory.

If a printer which ejects pages print side down is in use and the document is printed from the beginning to the end, the pages of the document will be forward collated print side down. Upon retrieval of the document, the document has to be reoriented or simply turned upside down for someone to begin reading the document from the beginning. If the same type of printer is used and the pages of the document are printed from the end of the document to the beginning, upon completion of printing the document will be reverse collated, print side down. To begin reading from the beginning, the document must be recollated by hand or machine, or else each page must be turned up side down.

In the above description, it is assumed that, if the pages are ejected print side up, the pages will be stacked print side up, and vice versa. However, if a printer in use ejects pages print side up and has stacking apparatus which causes the pages to be stacked print side down, a collating mode can be selected, as described later herein, based on the printer in use and the order of stacking desired.

A forward collated printed document is a document having the pages arranged or ordered in ascending order when the document is oriented such that the beginning page is print side up. A reverse collated document is a document having the pages arranged in descending order when the document is oriented such that the last page of the document is print side up and is the first page encountered. When the pages are arranged in ascending order, the order will be page 1, page 2, ... page n. When the pages are arranged in descending order, the order will be page n, ... page 2, and page 1.

Collating of pages of documents is an old concept. The evolution of collating has been from hand to machine, with hand collating still being fairly common. Machine collating has taken a number of forms. In the office copier and printer arenas, apparatus is provided for stacking pages as printed in a logical or ascending order. Also, apparatus is provided for ejecting pages print side down in order to have a document arranged in logical order. When the pages are ejected print side down and the document is retrieved, it must be turned down side up. This is a minor inconvenience.

Even with the above in mind, it must be appreciated that there is a tremendous in-use inventory of printers and copiers in the business world today which have no capability of collating by stacking the last printed page, print side up on the bottom of a stack. The reasons for the purchase of such machines in the first instance are many and varied. In some instances, the driving force may have been other features of the machine. In other instances, the driving force may have been cost. However, as far as collating is concerned, the reasons are immaterial. The fact is that printers exist in the business world and collating problems are associated with these printers. Further, it is envisaged that similar printers will continue to be marketed for some years to come.

The object of the present invention is to provide an improved multi-page document printing system having the ability to print the pages of the document in a predetermined order with a predetermined orientation of the printed side of each page.

The present invention relates to a multi-page document printing system of the type which comprises means for storing representations of each page of the document, a plurality of output printers each of which supplies printed pages with a different orientation, and a control system for controlling the supply of the representations of the pages to the output printers so that the document can be printed.

According to the invention the printing system is characterised in that it comprises mode selection means for controlling the operation of the control system so that the control system supplies the representations of the pages to a selected one of the output printers in a selected order so that the pages of the document printed have a predetermined orientation.

A unique method of controlling printed document collation is provided in order to make use of a wide variety of printers, eliminate the need for expensive collating apparatus, and impart flexibility in the ordering of pages of a document upon the printing of the document. Following document pagination and prior to printing, a collating mode is selected. Selection of the mode is based on the desired arrangement of the document upon printing and the printer in use.

In order that the invention may be more readily understood an embodiment will now be described with reference to the accompanying drawings, in which:

Figs. 1-3 are flow charts illustrating operations and functions which are performed by the printing system illustrated in Fig. 4, and

Fig. 4 is a block diagram of a text processing and document printing system including the printer in which the invention can be implemented.

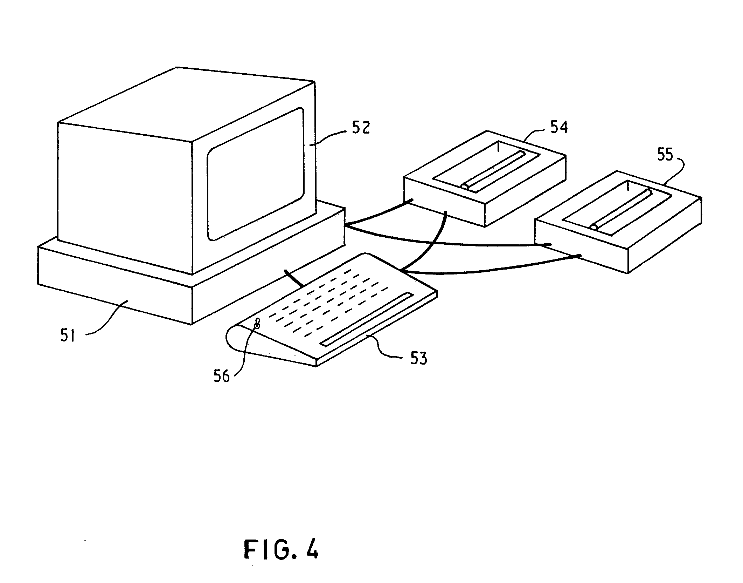

Figure 4 illustrates a text processing and document system including two printers which can be used to implement the present invention. The system comprises a keyboard/display standalone, or host connected, computing system including a processor 51, a display device 52, a keyboard 53 and two printers 54, 55. A text processing application program has been loaded into the processor 51 of the system. The first printer 54 ejects and stacks printed pages one on top of another, print side up, and that the second printer 55 ejects and stacks printed pages one on top of another, print side down. A document made up of an equivalent of a plurality of printed pages is stored in a memory included in the processor 51 of the system, and is ready for printing. The keyboard includes a switch 56 for selecting a collating mode as described below.

The stored document has been paginated. As pointed out earlier, pagination can be performed by an operator either a) inputting page end codes during document preparation or b) calling a pagination routine from the text processing application or some other source. For purposes of clarity and ease of understanding, it is to be assumed that an application program routine in the processor 51 is used to paginate the document and that pagination has been completed. As such, the stored document is divided into pages. Also for purposes of clarity and ease of understanding, it is to be assumed that the pages are stored sequentially, as opposed to randomly, in memory, and are arranged and output to a printer in ascending order.

With the above assumptions in mind, if the first printer 54 is to be used and the printed pages are to be forward collated with the lowest number page on top of the stack, the document to be printed is defined, and a reverse collate mode is selected. This will result in pages being sequentially issued to the printer 54 beginning with the last page of the defined document. Definition of the document to be printed can be by selecting any specified pages or section of the stored document. Mode selection can be by keying a code or sequence of codes, providing the system with a toggle switch 56, etc.

If the first printer 54 is to be used and the printed pages are to be reverse collated, a forward collate mode is selected. This will result in the pages being sequentially issued to the printer 54 beginning with the first page of the document. The highest page number will be on top of the stack, print side up, upon completion of printing.

If the second printer 55 is available and is to be used for printing the document forward collated, a forward collate mode is selected. If the document is to be reverse collated upon printing using the second printer 55, a reverse collate mode is selected.

Set out below is an illustration of a control routine which can be either separately packaged or included in the text processing application in the processor 51. This routine is usable by the processor 51 for collating pages of a document upon printing. This routine is in program design language from which source and machine code are derivable. Also, this routine is made up of subroutines which will also be referred to as routines.

```
Begin_Procedure Print_file (file_name, from_page,

               through_page, collate; status)


     Open_disk_file (file_name, control_block, status)
     If (status .eq. opened), then
          Call Open_converter (control_block,
               from_page, through_page, collate; status)
     Endif
     If (status .eq. good (opened)), then
          Until (fatal_error .or. end_of_file), do
               Call Convert_data (control_block;
                  status)
               If (status .eq. good), then
                    Write data to printer (data,
                       status)
               Endif
          Enddo
     Endif


End_Procedure Print_file
```

At the beginning of the operation, a disk file with an operator specified file name is opened (Open_disk_file). If the file is successfully opened, then a converter is opened (Call Open_converter). Upon opening of the converter, a determination is made as to whether any data (text) is available within the operator specified page range and if there is data. The record number bounds are determined and a good/opened status is returned. If the converter has been successfully opened, then a convert data operation is performed (Call Convert_data). This operation keeps track of the current record (text line) and if required, keeps track of the current position within a record. With printers which are line oriented, one line at a time will be converted. The return status from the convert data operation is checked, and if there are no errors, the converted data is written or issued to the printer to be used for printing the data (Write data). If no fatal error has occurred upon reading from disk, and there is still more data to convert, there is a return to the convert data operation.

```
Begin_Procedure Open_converter (control_block,

              from_page, through_page, collate; status)


    Validate_page_range (from_page, through_page;

           status)


    If (status .eq. good (data found in range)), then
         If (collate .eq. reverse), then
              Set current_page = through_page
              Set terminate_record_number =
                last_record_number_in_from_page
         Else                      ; collate = forward
              Set current_page = from_page
              Set terminate_record_number =
                last_record_number_in_through_page
         Endif
         Get_page_information (current_page;
           first_record_number, last_record_number,
           status)
         Set record_number = first_record_number
    Endif
    If (status .eq. good (page info. found)), then
         Read_record (record_number; status)
    Endif


End_Procedure Open_converter
```

The Open converter routine referred to above will now be described in greater detail.

A determination (Validate__page) is made as to whether data exists between the from__page and through__ page. If data is found, then a collate flag is checked. If the flag is set to collate reverse, a current or the beginning page of the document to be printed is set to the operator specified last page and the terminate record number is set to the last record number in the operator specified first page. If the collate flag is not set reverse (collate = forward), the current, beginning, or starting page is set to the operator specified first page and the terminating record number is set to the last record number in the operator specified last page. Regardless of the collate status, the new first or current page data is sought (Get__page__information) and the first record number of the first page is set to the current record number. Thereafter, if no problems are encountered with disk access (If ..., then), the first record is read (Read__record).

```
Begin_Procedure Convert_data (control_block, status)

        If (data for current_request not yet read), then
            If (record_number .eq.
                terminate_record_number), then
                Set status = end_of_data   ;no data
            Else                      ;more records to read
                Set record_number = record_number + 1
                If (record_number .gt.
                    last_record_number_in_page), then
                    If (collate .eq. reverse), then
                        Get_previous_page_info
                            (page_name;
                            first_record_number_in_page,
                            last_record_number_in_page,
                            status)
                    Else       ;collate is forward
                        Get_next_page_info
                            (page_name;
                            first_record_number_in_page,
                            last_record_number_in_page,
                            status)
                    Endif
                Set record_number =
                        first_record_number_in_page
                Endif
                If (status .eq. good (page info.
                                      found)),then
                    read_record (record_number;status)
                Endif
            Endif
        Endif
        If (status .eq. good (data available)), then
            format data for print
        Endif


End_Procedure Convert_data
```

The Convert data routine referred to above will now be described in greater detail.
If no more data has been read for converting, a determination is made by comparing the record number against the terminate record number. If they are equal, then printing has been completed. Otherwise, additional records should be available, and the record number is incremented (Set ... = record__number + 1). If all of the records in the page have been processed, and collate is set to reverse, the previous page is sought (Get__previous__page ...). If collate is set forward, the next page is sought (Get__next__page__ ...). In either case, if no errors have been encountered, the first record of the new (previous or next) page is read. If there are still no errors, the data is formatted for issuance to the printer.

When the control routine is first called, a selection menu is presented to the operator. The operator will select a document by keying in the document name, and a collate mode. Thereafter, the operator will define the document to be printed by specifying the pages of the document to be printed. The document to be printed is then stored in a control block, or a control block is set up including the pages to be printed. If the pages are to be printed in the same order as stored, the pages are then sequentially issued to the printer.

If, on the other hand, a collate mode has been selected requiring the pages to be issued to the printer in a reverse order, the system will convert the order for issuance to the printer.

When reference is made to selection of a collate mode, if there is a system default of a particular mode, the default is to be taken as having been selected. Also, the default mode can be for pages to be printed beginning with the first page of the defined document irrespective of whether the document will be forward or reverse collated upon printing. Further, there can be a default mode for each printer included in the system.

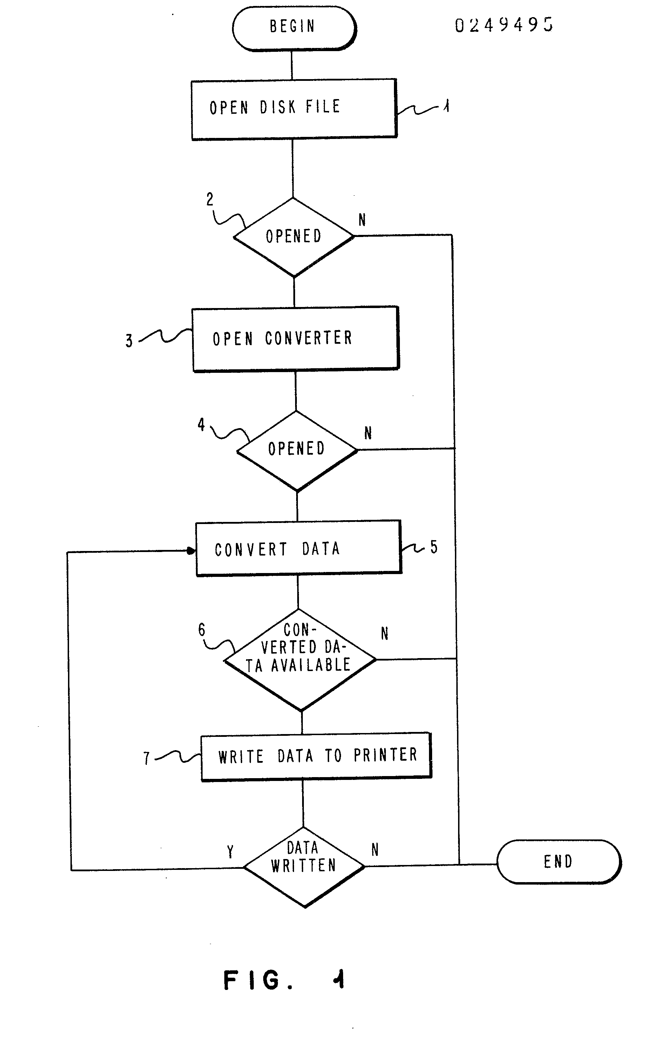

The above described routine will now be described with reference to the flow charts of Figs. 1-3. Refer first to Fig. 1. At the beginning of operation, a disk file containing the document is opened as indicated by block 1. When opened, as indicated by decision or logic block 2, a converter represented by block 3 is opened. Opening of converter 3 determines if any data is available within the operator specified page range, and, if so, the record number bounds. During this determination, depending on the data structure and the ability to start formatting at the beginning of a selected page, when collate equals reverse, formatting information is obtained. That is, when collate equals reverse, if forward sequential processing is normally required for formatting, then the formatting information for the start of each page is retrieved so as not to require a new sequential search. After converter 3 has been opened as indicated by logic block 4, a convert data operation is performed as indicated by block 5. This operation keeps track of the current record, and if required, of the current position within a record. This information is stored in a control block with formatting information for the pages to be printed. Once converted data is available, as indicated by logic block 6, the data is written or issued to the printer as indicated by block 7.

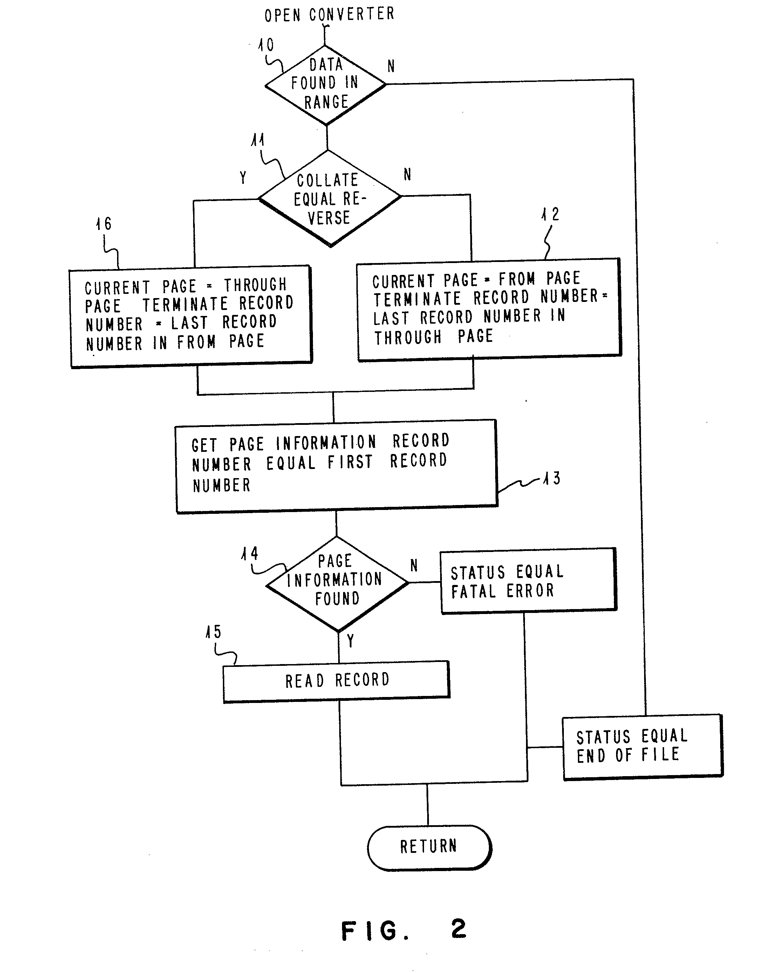

With the makeup of a document to be printed being an equivalent of a plurality of printed pages, each in turn made up of a number of text lines, the makeup of block 3 in Fig. 1 will be discussed in greater detail. Reference in this respect is made to Fig. 2. A determination is made in logic block 10 as to whether pages are found within the range specified by the operator. If so, a determination is made by logic block 11 as to whether a reverse collate mode has been selected, or whether a system default forward collate mode will be relied on. If a default forward collate mode will be relied on, then the current or starting page is set equal to the specified beginning page of the document as indicated by block 12, and the terminate record number is set to the last record number in the specified ending page. If a reverse collate mode has been selected, then the current or starting page is set to the last page and the terminate record number is set to the last record number in the specified first page as indicated by block 16. For either collate forward or collate reverse the first line or record of the current page is sought as indicated by block 13. If the page formatting data is found as indicated by block 14, the first record is read as indicated by block 15.

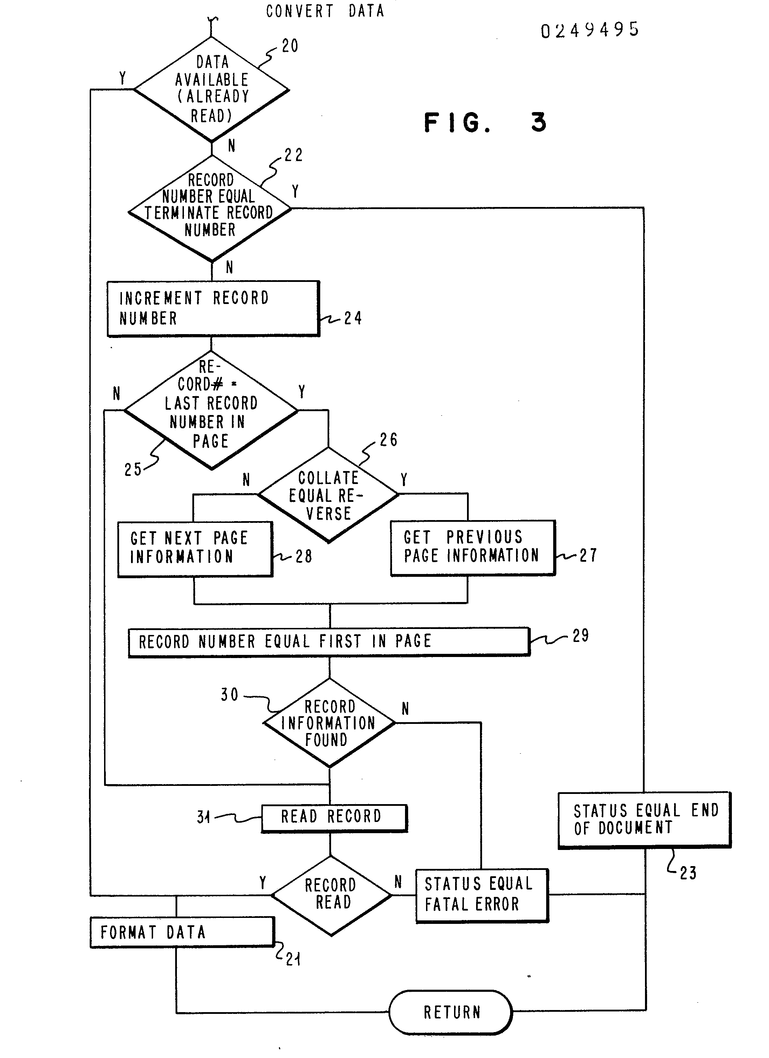

It is to be understood that each page is made-up of a number of identified and numbered lines. With this in mind, the makeup of convert data block 5 in Fig. 1 will be discussed in greater detail with reference to Fig. 3.

A determination is made by logic block 20 as to whether data not yet processed, but available, has been read. If so, the data is formatted by block 21. If not, a record number determination is made against the terminate record number by logic block 22. When the current record number equals the terminate record number, the end of the document has been reached as indicated by block 23. If the last record number has not been read as indicated by block 22, the record number is incremented as indicated by block 24. When the last record number for a page (last line of a page) is reached as indicated by block 25, a determination is made by logic block 26 as to whether a reverse collate mode has been selected. If a reverse collate mode has been selected, the previous page of the document to be printed is retrieved as indicated by block 27. If not, the next page is retrieved as indicated by block 28. Thereafter, and irrespective of the page retrieved, the first line on the retrieved page is sought as indicated by block 29. If a line is found as indicated by block 30, the line is read as indicated by block 31. If not, then a fatal error has occurred in reading data from the disk.

In summary, a unique method of controlling document collation is provided in order to make use of a wide variety of printers, eliminate the need for expensive collating apparatus, and impart flexibility in the ordering of pages of a document upon a printing of the document. Following document pagination and prior to printing, a collating mode is selected. Selection of the mode is based on the desired arrangement of the document upon printing and the printer in use.

**0 249 495**

**Claims**

1. A multi-page document printing system comprising
means (51) for storing representations of each page of said document,
a plurality of output printers (54, 55) each of which supplies printed pages with a different orientation, and
a control system (51) for controlling the supply of said representations of the pages to said output printers so that said document can be printed,

characterised in that it comprises

mode selection means (56) for controlling the operation of said control system so that it supplies the representations of the pages to a selected one of said output printers in a selected order so that the pages of the document printed have a predetermined orientation.

2. A document printing system as claimed in claim 1 characterised in that there are two output printers (54, 55), one of which supplies printed pages in succession, print side up, and the other of which supplies printed pages in succession, print side down.

3. A document printing system as claimed in either of the preceding claims characterised in that said control system supplies the representations of the document pages to the selected output printer either in the normal order, from the first page to the last page, or in the reverse order, from the last page to the first page.

4. A method of printing a multi-page document comprising
storing representations of each page of said document, and
supplying said representations of the pages to a plurality printers each of which supplies printed pages with a different orientation so that said document can be printed,

characterised in that

said representations of the pages are supplied to a selected one of said printers in a selected order so that the pages of the document printed have a predetermined orientation.

5. A method of printing a document as claimed in claim 1 characterised in that there are two output printers, one of which supplies printed pages in succession, print side up, and the other of which supplies printed pages in succession, print side down.

6. A method of printing a document as claimed in claim 4 or claim 5 characterised in that the representations of the document pages are supplied to the selected output printer either in the normal order, from the first page to the last page, or in the reverse order, from the last page to the first page.

8

0249495

**FIG. 1**

FIG.    2

CONVERT DATA

F I G. 3

0249495

Flowchart:

- 20 DATA AVAILABLE (ALREADY READ) — Y / N
- 22 RECORD NUMBER EQUAL TERMINATE RECORD NUMBER — Y / N
- 24 INCREMENT RECORD NUMBER
- 25 RE-CORD# = LAST RECORD NUMBER IN PAGE — N / Y
- 26 COLLATE EQUAL RE-VERSE — N / Y
- 28 GET NEXT PAGE INFORMATION
- 27 GET PREVIOUS PAGE INFORMATION
- 29 RECORD NUMBER EQUAL FIRST IN PAGE
- 30 RECORD INFORMATION FOUND — N
- 31 READ RECORD
- RECORD READ — Y / N
- STATUS EQUAL FATAL ERROR
- 23 STATUS EQUAL END OF DOCUMENT
- 21 FORMAT DATA
- RETURN

0249495

FIG. 4